Europäisches Patentamt

(19) European Patent Office

Office européen des brevets

(11) Numéro de publication : **0 106 753**
**B1**

(12) FASCICULE DE BREVET EUROPÉEN

(45) Date de publication du fascicule du brevet :
30.12.86

(51) Int. Cl.⁴ : **G 21 C 19/06**, G 21 C   1/02

(21) Numéro de dépôt : 83401934.1

(22) Date de dépôt : 03.10.83

(54) **Réacteur à neutrons rapides refroidi par un métal liquide.**

(30) Priorité : 07.10.82 FR 8216808

(43) Date de publication de la demande :
25.04.84 Bulletin 84/17

(45) Mention de la délivrance du brevet :
30.12.86 Bulletin 86/52

(84) Etats contractants désignés :
BE DE GB IT NL

(56) Documents cités :
FR-A- 1 322 563
FR-A- 2 168 199
FR-A- 2 180 517
FR-A- 2 246 941
NUCLEAR ENGINEERING INTERNATIONAL, vol. 21,
no. 246, juillet 1976, pages 56-58 F. VOGT: "The SNR-
300 fuel handling system"

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Artaud, Robert
9, Avenue Claude Debussy
F-13100 Aix en Provence (FR)**
Inventeur : **Aubert, Michel
Chemin de Sainte Roustagne
F-04100 Manosque (FR)**
Inventeur : **Renaux, Charley
"Les Extrées"
F-13490 Jouques (FR)**

(74) Mandataire : **Mongrédien, André et al
c/o BREVATOME 25, rue de Ponthieu
F-75008 Paris (FR)**

## Description

L'invention a pour objet un réacteur à neutrons rapides comportant un sommier de stockage indépendant du sommier du cœur.

Elle s'applique plus particulièrement à un réacteur à neutrons rapides refroidi au moyen d'un métal liquide, comme par exemple le sodium. Un tel réacteur comporte une cuve principale à axe vertical contenant le métal liquide de refroidissement dans lequel est immergé le cœur du réacteur.

Le cœur est constitué par un ensemble de boîtiers allongés contenant chacun un faisceau d'aiguilles gainées enfermant de la matière fissile et/ou fertile. Ces boîtiers comportent, à leur extrémité supérieure, une tête de préhension qui permet de les soulever et de les transférer. A leur partie inférieure, ils comportent un pied permettant de les positionner dans un sommier de support horizontal, qui repose sur un platelage fixé au fond de la cuve.

Au cours de la vie du réacteur, il est nécessaire de remplacer périodiquement les assemblages arrivés en fin de vie par des assemblages neufs. Cette manutention est généralement effectuée au moyen d'un bras ou d'un grappin qui transfère les assemblages dans un pot de chargement et de déchargement qui permet d'évacuer les assemblages hors de la cuve du réacteur.

Dans les solutions déjà connues, l'extraction hors du cœur des assemblages irradiés en vue de leur remplacement par des assemblages neufs, est suivie d'une mise en stockage à l'intérieur de la cuve, en dehors du cœur, dans une zone où l'assemblage considéré peut se refroidir partiellement et perdre une partie de son activité résiduelle avant d'être sorti de la cuve principale, jusqu'à un stockage externe où son activité continue à diminuer.

Toutefois, dans l'état actuel de la technique, la zone de stockage fait partie intégrante du sommier de cœur. Il en résulte une augmentation des dimensions de ce sommier, et en particulier de son diamètre. Entre autres inconvénients, cela oblige à prévoir, dans la dalle qui ferme la cuve, un orifice suffisamment grand pour permettre le passage du sommier.

La présente invention a pour objet un réacteur nucléaire à neutrons rapides qui résout ces problèmes grâce à la présence d'un sommier de stockage indépendant du sommier de cœur.

On connaît également (FR-A-1 322 563) un réacteur à neutrons rapides refroidi au sodium dont le cœur est entouré par un réflecteur graphite. Radialement, à l'extérieur de ce réflecteur, on trouve un espace d'emmagasinage pour les cartouches de combustible du cœur.

Cependant, la cuve ne comporte pas de platelage ni de véritable sommier.

De façon plus précise, le réacteur nucléaire à neutrons rapides de l'invention, qui comprend une cuve contenant un métal liquide de refroidissement, un cœur immergé dans ledit métal, la cuve comportant un platelage sur lequel repose un sommier pour le cœur, ledit cœur étant constitué par une juxtaposition d'assemblages fichés dans le sommier, le métal liquide de refroidissement circulant de manière ascendante dans le cœur, le métal liquide étant appelé « métal liquide froid » avant sa circulation dans le cœur et « métal liquide chaud » après son passage dans ce dernier, se caractérise en ce qu'il comporte un sommier de stockage d'éléments combustibles stockés, ce sommier étant indépendant du sommier de cœur, disposé concentriquement à ce dernier et reposant sur le platelage, une circulation de métal liquide froid étant assurée dans les assemblages par récupération des fuites du sommier de cœur.

De nombreux avantages résultent de cette disposition. Le sommier de cœur et le sommier de stockage sont deux pièces distinctes qui peuvent être mises en place séparément dans le réacteur. Les dimensions du sommier de cœur, et en particulier son diamètre, sont réduites.

Le sommier de cœur étant de préférence introduit par l'orifice du bouchon tournant, cela permet de réduire d'autant la butée sur le diamètre minimum du bouchon tournant. Par ailleurs, le sommier de stockage ne nécessite pas un usinage aussi précis que le sommier de cœur.

Le sommier de stockage qui est raccordé hydrauliquement au platelage, peut être constitué par une couronne d'une seule pièce, ou être formé de deux ou plusieurs modules. Ce sommier de stockage peut être posé et fixé au platelage ou constitue une structure monolithique avec le platelage dans la variante d'une couronne d'une seule pièce.

De préférence, le sommier de stockage comporte un espace libre dans lequel est disposé un poste de chargement et de déchargement du réacteur. Cette disposition permet de rapprocher ce poste du cœur et donc de réduire le diamètre de la cuve principale, ce qui est un avantage très important en raison des économies qu'elle permet de réaliser.

D'autres caractéristiques et avantages de l'invention apparaîtront encore à la lecture de la description qui suit d'un exemple de réalisation donné à titre indicatif et nullement limitatif. La description se réfère aux figures annexées, sur lesquelles :

la figure 1 représente une vue schématique en coupe d'un réacteur nucléaire à neutrons rapides comportant un sommier de stockage indépendant réalisé conformément à l'invention,

la figure 2 représente une vue à échelle agrandie du sommier de stockage du réacteur de la figure 1, comprenant une vue de détail a qui montre en particulier la section elliptique des canalisations qui relient les pompes de circulation au sommier de stockage,

la figure 3 représente schématiquement une vue en section transversale selon la ligne IV-IV de la figure 1 du réacteur équipé d'un sommier de stockage en deux parties,

la figure 4 représente une vue montrant un exemple de fixation d'un assemblage dans le sommier,

les figures 5 et 6 représentent deux variantes d'exécution d'un sommier de stockage réalisé conformément à l'invention.

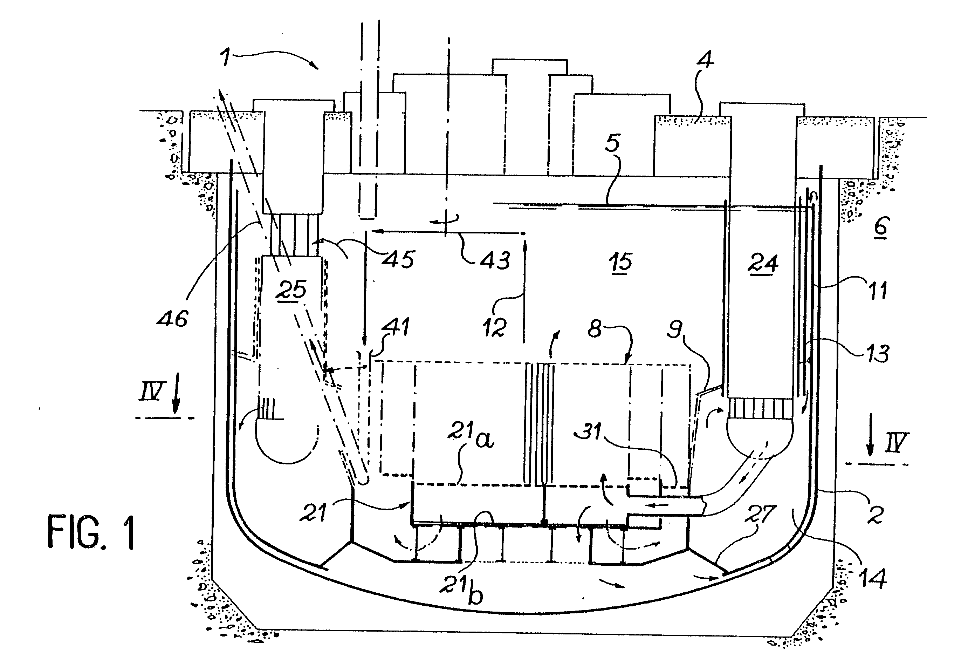

On a représenté sur la figure 1 une vue en coupe d'un réacteur nucléaire 1 à neutrons rapides comportant un sommier de stockage réalisé conformément à la présente invention. Le réacteur nucléaire 1 se compose d'une cuve 2 à axe vertical suspendue à une dalle horizontale 4 et remplie d'un métal liquide de refroidissement 5, généralement du sodium. Le niveau de sodium liquide est surmonté par une couche d'un gaz inerte, habituellement de l'argon. La dalle horizontale 4 repose sur une enceinte de béton 6 à parois épaisses. Le cœur 8 du réacteur disposé à l'intérieur d'une cuve supplémentaire, ou cuve interne 9, qui délimite dans la cuve principale 2 deux régions séparées, est immergé dans le sodium liquide 5. Il est constitué essentiellement par des assemblages combustibles et des assemblages fertiles.

Sur la demi-vue de droite, on a représenté une réalisation particulière de la cuve du réacteur nucléaire. Cette réalisation se caractérise par le fait qu'elle comporte une virole cylindrique 11 appelée également baffle ménageant entre elle-même et la cuve 2 un premier espace annulaire. Intérieurement à la virole 11, on trouve une deuxième virole 13 appelée également contre-baffle ménageant entre elle-même et la virole 11 un deuxième espace annulaire. L'espace annulaire compris entre la cuve 2 et la virole 11 sert à l'alimentation en métal liquide froid. L'espace annulaire compris entre les viroles 11 et 13 sert à son évacuation. Un réacteur nucléaire de ce type est décrit dans le FR-A-2 333 328 au nom du Commissariat à l'Energie Atomique pour « réacteur nucléaire ».

Quelle que soit la réalisation de la cuve du réacteur, c'est-à-dire qu'elle comporte ou non un baffle et un contre-baffle, les assemblages 10 sont fichés dans un sommier 21 solidaire d'un platelage 27, reposant lui-même sur le fond de la cuve 2.

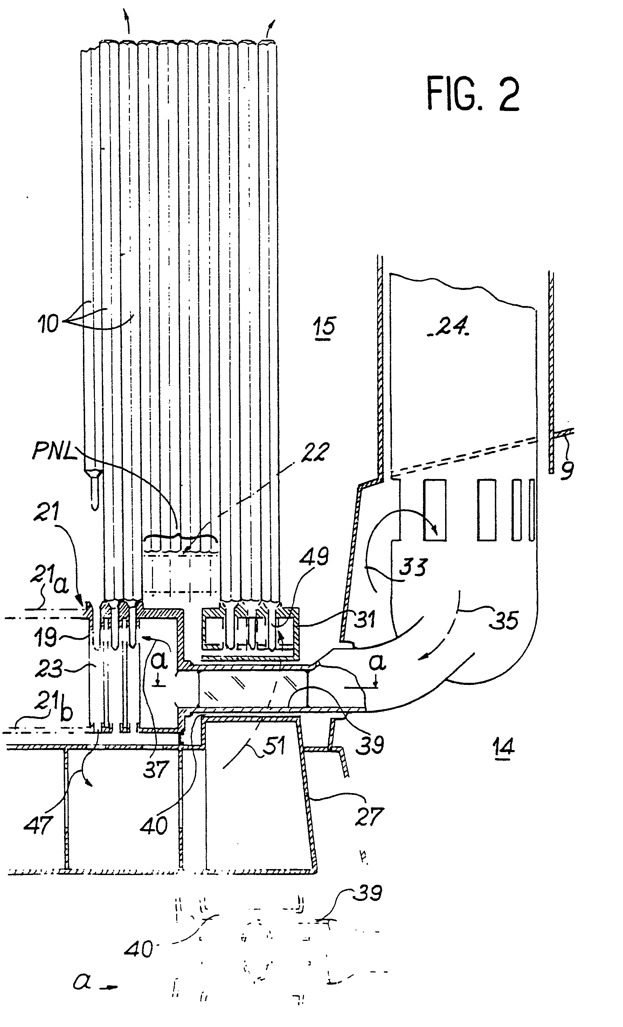

Le réacteur nucléaire comporte des moyens qui permettent d'assurer la circulation du métal liquide de refroidissement. Ces moyens sont constitués par des pompes de circulation 24 (figures 1 et 2) et des échangeurs 25 disposés à la périphérie de la cuve 2. A la sortie d'une pompe 24, le sodium est introduit sous haute pression à la base des assemblages et traverse ceux-ci de bas en haut pour ressortir à la partie supérieure du cœur. La cuve interne 9 délimite ainsi un collecteur froid 14 situé à la partie inférieure de la cuve et un collecteur chaud 15 situé à la partie supérieure. A l'entrée du cœur, le sodium a une température de l'ordre de 400 °C et une température de l'ordre de 550 °C à la sortie de celui-ci. La chaleur accumulée au cours du passage dans le

cœur est abandonnée dans les échangeurs de chaleur 25, le sodium parcourant ces échangeurs de haut en bas et ressortant à la partie inférieure de ces derniers dans le collecteur froid où il est aspiré à nouveau par les pompes de circulation pour être réintroduit dans le sommier.

Le réacteur nucléaire 1 comporte un sommier de stockage 31 pour les assemblages indépendants du sommier du cœur 21. Le sommier 31 repose directement sur le platelage 27 par lequel il est alimenté hydrauliquement en métal liquide froid. Il constitue donc une structure autonome indépendante du sommier 21. Il est disposé concentriquement à ce dernier. Comme on peut le voir sur la figure 2, le métal liquide froid est aspiré dans le collecteur 14, c'est-à-dire sous la cloison de séparation 9, comme le montre la flèche 33, puis refoulé selon la flèche 35 dans le sommier de cœur pour être introduit dans les pieds des assemblages combustibles 10 comme le montre la flèche 37.

Entre les assemblages 10 du cœur et ceux du sommier de stockage 31 on trouve les assemblages constituant la protection neutronique latérale (PNL) qui repose sur le sommier de cœur 21 par l'intermédiaire d'un faux sommier 22.

Les canalisations 39 qui relient les pompes 24 au sommier 21 traversent le platelage 27. Pour que ces canalisations puissent tenir dans la hauteur restant disponible du sommier de stockage 31, leur section peut être aplatie de manière à présenter une forme elliptique, comme on peut le voir sur la figure de détail a qui représente une canalisation 39 et sa section en traits mixtes, ainsi que le passage 40 ménagé dans le platelage 27 pour cette canalisation.

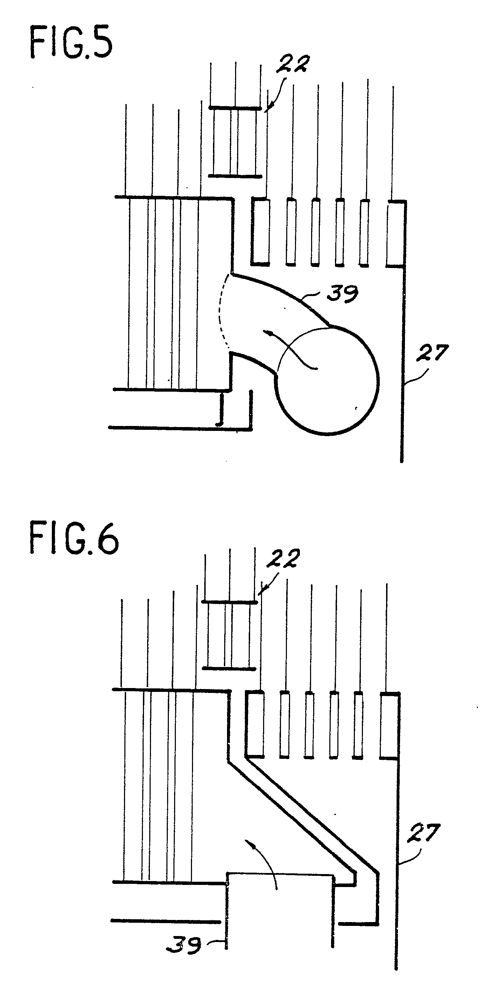

L'alimentation du sommier de cœur à travers le sommier de stockage peut aussi être réalisée par dédoublement de la canalisation d'alimentation en canalisations de plus faibles diamètres (fig. 5).

Une autre variante consiste à alimenter le sommier de cœur par le dessous à travers le platelage (fig. 6).

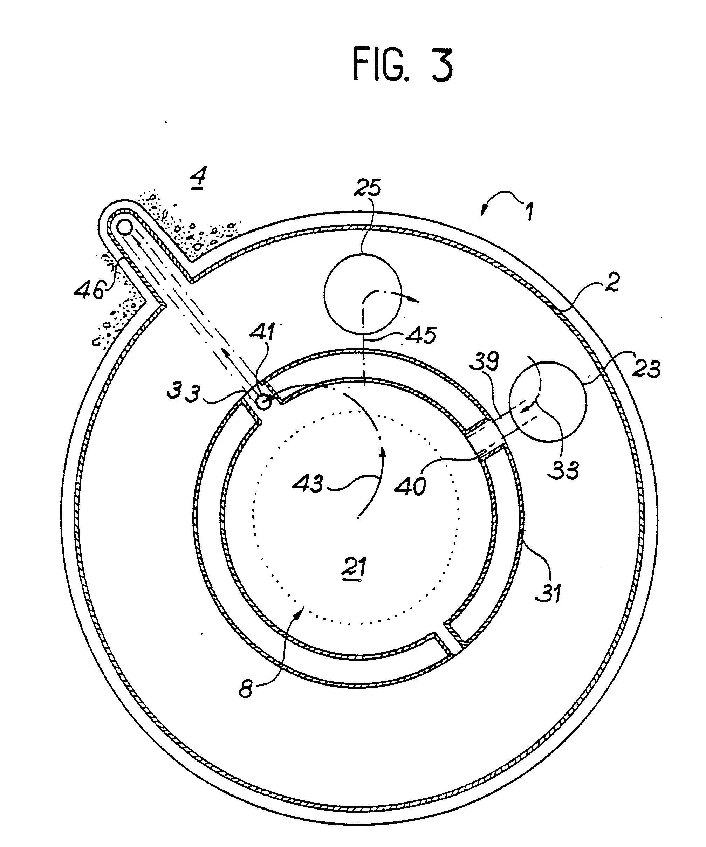

On a représenté sur la figure 3 une vue schématique en section transversale selon la ligne IV-IV de la figure 1, du réacteur nucléaire équipé d'un sommier de stockage 31 réalisé conformément à l'invention. Comme on peut le voir sur cette figure, le sommier de stockage est réalisé en deux parties, chacune de ces parties présentant la forme d'une demi-couronne.

Un des deux espaces, en l'occurrence 33, situé entre ces deux demi-couronnes, est laissé suffisamment large pour permettre l'implantation du poste de chargement et de déchargement du réacteur.

En effet, lors de l'opération de déchargement on extrait les assemblages du cœur 8 puis on les transfère au moyen d'un bras de manutention, comme représenté par les flèches 43 (figures 1 et 3), dans un pot de manutention 41 du poste de chargement et de déchargement disposé à la périphérie du cœur 8. Le pot 41 est susceptible de se déplacer sur une rampe oblique 46 plongeant à l'intérieur de la cuve 2 et traversant la dalle supérieure 4.

L'espace 33 laissé libre par les deux demi-couronnes qui forment le sommier de stockage 31 permet de rapprocher le pot de manutention 41 du poste de chargement et de déchargement situé à la périphérie du cœur, et donc de réduire les dimensions, en particulier le diamètre externe, de la cuve 2. Ceci permet d'importantes réductions de coût du réacteur.

On remarque également sur la figure 3 la disposition des pompes et des échangeurs concentriquement au cœur. Une pompe 24 et un échangeur 25 seulement ont été représentés afin de ne pas surcharger la figure. On a figuré par des traits mixtes la circulation du métal liquide de refroidissement. La flèche 45 (figures 1 et 3) schématise l'aspiration du métal liquide chaud sortant du cœur dans l'échangeur de chaleur 25. La flèche 33 (figures 2 et 3) schématise le refoulement sous pression du métal liquide refroidi, après son passage dans les échangeurs, dans le sommier de cœur 21. On peut voir sur la figure 3 une canalisation 39 reliant la pompe 24 au sommier de cœur 21.

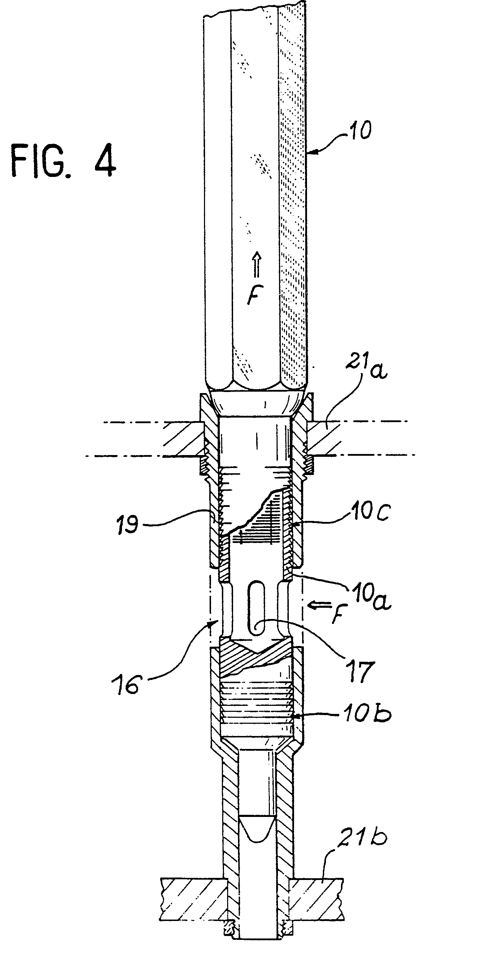

Afin d'illustrer la manière dont se produisent les fuites de métal liquide froid en direction du platelage, on a représenté sur la figure 4 un exemple de réalisation du maintien des assemblages combustibles dans un sommier de cœur. Naturellement, il ne s'agit que d'un exemple et bien d'autres modes de fixation de ces assemblages pourraient être envisagés.

Le sommier 21 comprend deux plaques 21a et 21b perforées, dans lesquelles sont emmanchées des chandelles 19. Dans chaque chandelle est introduit le pied 10a de l'assemblage 10. Cette chandelle assure le supportage de l'assemblage 10 ainsi que l'alimentation en sodium liquide froid du pied de l'assemblage à travers les orifices oblongs 16, 17 ménagés, au même niveau, à la fois dans la chandelle et le pied de l'assemblage.

Pour assurer le verrouillage hydraulique de l'assemblage 10, on prévoit sur la face externe de son pied, de part et d'autre des orifices oblongs d'alimentation 16, 17, des labyrinthes 10b, 10c.

Cependant, l'étanchéité au niveau de ces labyrinthes n'est que relative, de sorte qu'il se produit un débit de fuite vers le platelage, comme on l'a décrit précédemment. En outre, il faut noter que le sodium liquide qui franchit le labyrinthe 10b subit une perte de charge de telle sorte que la pression qui règne dans le platelage 27 et le sommier de stockage 31 est notablement plus faible que celle qui règne dans le sommier de cœur 21. Ce métal liquide froid, basse pression, alimente les pieds 49 des assemblages stockés.

En outre, la pression qui règne à l'intérieur du sommier de stockage est légèrement supérieure à celle qui règne dans le collecteur chaud. Il se produit donc une circulation forcée de métal liquide froid de bas en haut dans les assemblages stockés. Cette circulation a été schématisée par la flèche 51 sur la figure 2. Un refroidissement efficace des assemblages stockés garantit ainsi une bonne évacuation de la puissance résiduelle.

Dans le cas de la variante de réalisation du réacteur décrite et représentée sur la demi-vue de droite de la figure 1, c'est-à-dire la variante qui comporte un baffle 11 et un contre-baffle 13, les fuites des pieds d'assemblages servent également à l'alimentation en métal liquide froid de l'espace annulaire entre la cuve principale 2 et le baffle 11. Ceci est obtenu en créant sous le sommier de cœur 21 deux zones indépendantes de récupération des fuites, l'une alimentant l'espace annulaire du baffle 11 et l'autre le sommier de stockage 31, comme le montrent les flèches de la figure 1.

Les tolérances de fabrication étant plus grandes et les jeux entre les assemblages stockés et les assemblages de la protection neutronique latérale pouvant également être plus grands pour accepter des arcages importants, la précision de la réalisation du sommier de stockage 31, peut être réduite, ce qui en diminue le coût de fabrication.

Un autre avantage du sommier de stockage selon l'invention est que ce dernier étant à basse pression, permet d'utiliser des orifices de réglage de débit de grand diamètre et d'éliminer ainsi les risques de bouchage, contrairement au sommier de stockage haute pression de l'art antérieur qui exige, pour obtenir de faibles débits de métal liquide de refroidissement dans les assemblages stockés, des orifices de réglage de débit de faible diamètre.

En ce qui concerne la réduction du diamètre du sommier de cœur 21 à l'intérieur duquel règne une haute pression, il faut noter que l'invention permet de le réduire au minimum indispensable. A titre d'exemple, pour un réacteur de 1 500 MWe, le diamètre de ce sommier haute pression, passe de 8,25 m à 6,50 m. Ceci permet, comme on l'a déjà mentionné, de faire passer ce sommier par une ouverture de faible diamètre du bouchon tournant.

L'implantation du poste de chargement et de déchargement sur un rayon égal au rayon du sommier de stockage 31 autorise la réduction du diamètre de la cuve principale, l'accès à la verticale du pot de chargement et de déchargement avec un grand bouchon tournant de 10 m de diamètre, alors que jusqu'à présent il était de 11,2 m pour un réacteur de 1 500 MWe. Enfin, cela permet la réduction de la longueur du bras de manutention des assemblages et du débattement angulaire de ce bras.

Le sommier doit pouvoir être introduit par le trou prévu dans la dalle 4 pour loger le grand bouchon tournant. La réduction du diamètre du sommier 21 de 8,25 m à 6,50 m abaisse d'autant la limite du diamètre minimum du grand bouchon tournant résultant de cette contrainte. Ainsi, le diamètre minimum du grand bouchon tournant passe de 9 m à 7,25 m.

Contrairement à l'art antérieur, suivant lequel le poste de chargement et de déchargement du cœur se trouve à l'intérieur de la PNL, l'invention présente l'avantage de placer ce poste à l'extérieur de la PNL et, par conséquent, assure la continuité de la protection sur toute la périphérie du cœur.

## Revendications

1. Réacteur nucléaire à neutrons rapides comprenant une cuve (2) contenant un métal liquide de refroidissement (5), un cœur (8) immergé dans ledit métal (5), la cuve (2) comportant un platelage (27) sur lequel repose un sommier (21) pour le cœur, ledit cœur étant constitué par une juxtaposition d'assemblages (10) fichés dans le sommier (21), le métal liquide de refroidissement circulant de manière ascendante dans le cœur (8), le métal liquide étant appelé « métal liquide froid » avant sa circulation dans le cœur et « métal liquide chaud » après son passage dans ce dernier, caractérisé en ce qu'il comporte un sommier de stockage (31) d'assemblages stockés (10), ce sommier étant indépendant du sommier de cœur (21), disposé concentriquement à ce dernier et reposant sur le platelage (27), une circulation de métal liquide froid étant assurée dans les assemblages (10) par récupération des fuites du sommier (21) de cœur.

2. Réacteur selon la revendication 1, caractérisé en ce que le sommier de stockage (31) raccordé hydrauliquement au platelage (27) est constitué de plusieurs modules.

3. Réacteur selon la revendication 1, caractérisé en ce que le sommier de stockage (31) raccordé hydrauliquement au platelage (27) est constitué par une couronne complète d'une seule pièce.

4. Réacteur selon l'une quelconque des revendications 2 et 3, caractérisé en ce que le transfert des assemblages hors de la cuve (2) du réacteur est assuré au moyen d'un pot (41) de chargement et de déchargement, le sommier de stockage (31) comportant un espace libre (33) dans lequel est situé l'emplacement du pot (41) de chargement et de déchargement des assemblages du réacteur.

5. Réacteur selon la revendication 3, caractérisé en ce que le sommier de stockage (31) est formé d'une seule pièce avec le platelage (27).

6. Réacteur selon la revendication 2, caractérisé en ce que les modules constituant le sommier de stockage (31) sont posés et fixés sur le platelage (27).

7. Réacteur selon la revendication 2, caractérisé en ce que le sommier de stockage (31) raccordé hydrauliquement au platelage (27) est constitué de deux demi-couronnes.

## Claims

1. Fast-neutron nuclear reactor comprising a vessel (2), containing a liquid metal coolant (5), a core (8) immersed in the said metal (5), the vessel (2) comprising a covering (27) on which rests a core grid (21), the said core consisting of a juxtaposition of assemblies (10) plugged into the grid (21), the liquid metal coolant circulating upwards through the core (8), the liquid metal being called « cold liquid metal » before it travels through the core and « hot liquid metal » after it has passed through the latter, characterized in that it comprises a storage grid (31) for stored assemblies (10), this grid being independent of the core grid (21), arranged concentrically with the latter and resting on the covering (27), circulation of cold liquid metal being ensured in the assemblies (10) by the recovery of leaks from the core grid (21).

2. Reactor according to Claim 1, characterized in that the storage grid (31) connected hydraulically to the covering (27) is made up of several modules.

3. Reactor according to Claim 1, characterized in that the storage grid (31) connected hydraulically to the covering (27) consists of a complete crown ring made as a single component.

4. Reactor according to either of Claims 2 and 3, characterized in that the transfer of the assemblies out of the reactor vessel (2) is performed by means of a loading and unloading unit (41), the storage grid (31) comprising a free space (33) in which the unit (41) for loading and unloading the reactor assemblies is sited.

5. Reactor according to Claim 3, characterized in that the storage grid (31) is made as a single component with the covering (27).

6. Reactor according to Claim 2, characterized in that the modules forming the storage grid (31) are laid on and attached to the covering (27).

7. Reactor according to Claim 2, characterized in that the storage grid (31) connected hydraulically to the covering (27) consists of two half-crown rings.

## Patentansprüche

1. Kernreaktor mit schnellen Neutronen mit einem Behälter (2), der ein flüssiges Kühlmetall (5), einen in das Metall eingetauchten Kern (8) enthält, wobei der Behälter (2) einen Bodenbelag (27) aufweist, auf welchem ein Querträger (21) für den Kern ruht, welcher Kern von einer Verbundanordnung von Brennelementen (10) gebildet ist, die in den Querträger (21) eingesteckt sind, wobei das flüssige Kühlmetall aufsteigend in dem Kern (8) zirkuliert, das flüssige Metall vor seinem Durchlauf durch den Kern « kaltes flüssiges Metall » und nach seinem Durchlauf durch letzteren « heißes flüssiges Metall » genannt wird, dadurch gekennzeichnet, daß er einen Lagerungsquerträger (31) für gelagerte Brennelemente (10) aufweist, wobei dieser Querträger unabhängig vom Kernquerträger (21) ist, konzentrisch zu letzterem angeordnet ist und auf dem Bodenbelag (27) ruht, wobei ein Umlauf des kalten flüssigen Metalls in diesen Brennelementen (10) durch Ausnutzung der Leckströme am Kernquerträger (21) sichergestellt ist.

2. Reaktor nach Anspruch 1, dadurch gekennzeichnet, daß der mit dem Bodenbelag (27) hydraulisch verbundene Lagerungsquerträger (31) von mehreren Modulen gebildet ist.

3. Reaktor nach Anspruch 1, dadurch gekennzeichnet, daß der mit dem Bodenbelag (27) hydraulisch verbundene Lagerungsquerträger (31) von einem vollständig einstückigen Kranz gebildet ist.

4. Reaktor nach einem der Ansprüche 1 und 2, dadurch gekennzeichnet, daß die Überführung der Brennelemente aus dem Behälter (2) des Reaktors mit Hilfe eines Lade- und Entladetopfes (41) ausgeführt wird, wobei der Lagerungquerträger (21) einen freien Zwischenraum (31) aufweist, in welchem die Aufnahme des Lade- und Entladetopfes (41) für die Brennelemente des Reaktors angeordnet ist.

5. Reaktor nach Anspruch 3, dadurch gekennzeichnet, daß der Lagerungsquerträger (31) zusammen mit dem Bodenbelag (27) einstückig ausgebildet ist.

6. Reaktor nach Anspruch 2, dadurch gekennzeichnet, daß die Module, die den Lagerungsquerträger (31) bilden auf dem Bodenbelag (27) aufgesetzt und daran befestigt sind.

7. Reaktor nach Anspruch 2, dadurch gekennzeichnet, daß der mit dem Bodenbelag (27) hydraulisch verbundene Lagerungsquerträger (31) aus zwei Halbkränzen besteht.

FIG. 1

0 106 753

FIG. 2

# FIG. 3

FIG. 4

10

21a

19

10c

10a

16

17

10b

21b

# FIG.5

# FIG.6